# FASCICULE DE BREVET EUROPEEN

(11) **EP 2 069 166 B1**
(45) Date de publication et mention de la délivrance du brevet: **24.02.2010**
(21) Numéro de dépôt: 07858529.6
(22) Date de dépôt: 08.10.2007
(51) Int. Cl.: B60P 1/00, B62D 25/20, B60P 3/40

(54) **VÉHICULE AUTOMOBILE COMPORTANT UN PLANCHER AVEC UN LONGERON, PROCÉDÉ DE FABRICATION DU PLANCHER ASSOCIÉ**
KRAFTFAHRZEUG MIT EINEM BODEN MIT LANGSCHWELLE UND VERFAHREN ZUR HERSTELLUNG DES ENTSPRECHENDEN BODENS
MOTOR VEHICLE COMPRISING A FLOOR WITH A LONGITUDINAL MEMBER, AND METHOD OF MANUFACTURING THE ASSOCIATED FLOOR

(30) Priorité: 06.10.2006 FR 0608791
(43) Date de publication de la demande: 17.06.2009
(73) Titulaire: Renault SAS, 92100 Boulogne Billancourt (FR)
(72) Inventeur: DELORD, Christian, F-93320 Pavillons-sous-bois (FR)
(74) Mandataire: Religieux, Vincent
(86) Numéro de dépôt international: PCT/FR2007/052098
(87) Numéro de publication internationale: WO 2008/040920

(56) Documents cités:
- US-A1- 2006 033 353

## Description

### DOMAINE TECHNIQUE GENERAL

L'invention concerne un véhicule automobile comportant :
- un plancher présentant une face supérieure, une face inférieure, et au moins une nervure s'étendant selon une direction rectiligne sur au moins une longueur et comportant une section droite constante sur au moins une partie de ladite longueur,
- au moins un longeron fixé sur la face inférieure ou supérieure du plancher.

L'invention concerne également un procédé de fabrication d'un plancher correspondant.

### ETAT DE L'ART

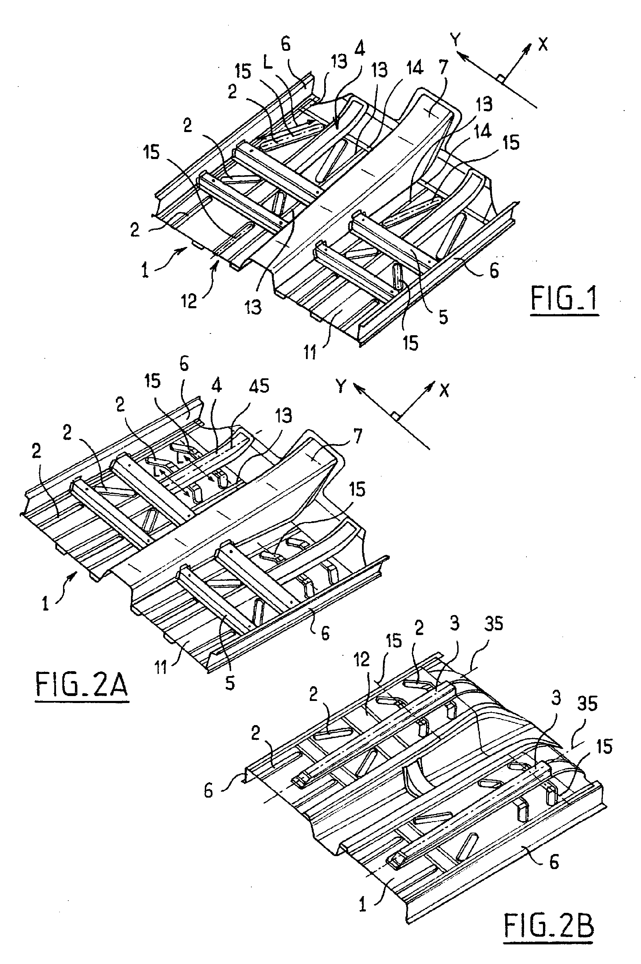

Les véhicules automobiles comportent un plancher, dont une partie d'un mode de réalisation connu est représentée à la figure 1.

Le plancher 1 connu comporte une face 11 supérieure, une face inférieure 12 et une série de nervures 2.

La face supérieure 11 désigne la face dirigée du côté de l'habitacle du véhicule, et la face inférieure 12 désigne la face dirigée vers le support sur lequel roule le véhicule.

Comme le montre la figure 1, chaque nervure 2 est une partie du plancher 1 en saillie par rapport à un plan moyen du plancher 1. Ainsi, chaque nervure 2 est un pli formé dans la plaque de tôle mince du plancher 1. Le pli peut être formé vers la face supérieure 11 ou la face inférieure 12 du plancher 1.

Chaque nervure 2 s'étend selon une direction rectiligne 15 sur au moins une longueur. Chaque nervure 2 comporte également une section droite constante sur au moins une partie L de ladite longueur.

Le véhicule comporte également au moins un longeron fixé sur la face inférieure 12 du plancher, chaque longeron étant en général associé à un autre longeron formant surlongeron 4.

Dans la présente description, le terme « longeron » et le terme « surlongeron » désignent des pièces mécaniques rigides de renfort et de forme sensiblement longitudinale.

Un axe longitudinal du longeron et un axe longitudinal du surlongeron 4 s'étendent sensiblement parallèlement à un axe X. de la figure 1. L'axe X matérialise la direction « avant-arrière » du véhicule.

Le surlongeron 4 est fixé sur la face supérieure 11 du plancher, au niveau du longeron 3, bien qu'étant fixé sur une face opposée du plancher.

Le véhicule comporte également des traverses 5 dont un axe principal d'extension est perpendiculaire à l'axe longitudinal du longeron et/ou à l'axe longitudinal du surlongeron. En d'autres termes, l'axe principal des traverses 5 s'étend sensiblement parallèlement à un axe Y de la figure 1.

Chaque traverse 5 est fixée d'une part à une poutre longitudinale 6, cette dernière s'étendant parallèlement à l'axe X en partie latérale du plancher 1, et d'autre part à un tunnel 7, ce dernier s'étendant longitudinalement parallèlement également à l'axe X en partie centrale du plancher 1.

Le plancher 1 est rigide et permet un confort et une sécurité pour des passagers du véhicule.

En effet, les poutres 6 forment des renforts de bas volet. Le tunnel 7 renforce également le plancher 1 tout en permettant le passage de la ligne d'échappement du véhicule.

Les traverses 5 renforcent transversalement le plancher 1 et permettent l'absorption d'énergie lors de chocs latéraux sur le véhicule. Les traverses 5 permettent également la fixation de sièges pour des passagers du véhicule.

Les longerons et les surlongerons ont également un rôle d'absorption d'énergie lors d'un éventuel choc sur le véhicule.

Les nervures 2 confèrent une rigidité accrue au plancher 1 selon la direction rectiligne 15 selon laquelle elles s'étendent. Elles assurent ainsi la diffusion des efforts et une résistance à la flexion lors d'un choc sur le véhicule. Elles assurent également de bonnes propriétés acoustiques au plancher, en évitant des vibrations correspondant notamment aux modes de panneau du plancher.

Or, pour que les nervures 2 assurent correctement leur fonction mécanique et acoustique, elles doivent être encastrées à leurs extrémités avec au moins une pièce rigide fixée au plancher 1.

A cet effet, chaque nervure 2 vient en butée à ses extrémités sur des pièces de renfort 13 parallèles à l'axe X et/ou des pièces de renfort 14 parallèles à l'axe Y et/ou les traverses 5, voire les longerons et/ou les surlongerons.

La position des longerons et des surlongerons est par ailleurs également définie notamment par la position du bloc moteur du véhicule.

La position des longerons et des surlongerons selon les axes X et Y est ainsi définie pour un plancher de modèle de véhicule donné.

Ceci est onéreux pour les constructeurs automobiles, puisque ces derniers doivent prévoir un plancher différent pour chaque modèle de véhicule, la position des longerons et des surlongerons sur le plancher variant d'un modèle de véhicule à un modèle de véhicule différent.

### PRESENTATION DE L'INVENTION

L'invention propose de pallier ces inconvénients.

A cet effet, on propose selon l'invention un véhiculé automobile comportant :
- un plancher présentant une face supérieure, une face inférieure, et au moins une nervure s'étendant selon une direction rectiligne sur au moins une longueur et comportant une section droite constante sur au moins une partie de ladite longueur,
- au moins un longeron fixé sur la face inférieure ou supérieure du plancher, caractérisé en ce que
- le longeron est fixé sur le plancher au niveau de ladite partie de ladite longueur de la nervure,
- le longeron est par ailleurs apte, avant d'être fixé sur le plancher, à coulisser sur la nervure sur ladite partie de ladite longueur.

L'invention est avantageusement complétée par les caractéristiques suivantes, prises seules ou en une quelconque de leur combinaison techniquement possible:
- le longeron a une section droite, selon un axe longitudinal et un axe transversal, complémentaire de la section droite de la nervure selon des axes parallèles respectivement à l'axe longitudinal et à l'axe transversal ;
- le longeron est soudé sur le plancher ;
- la direction rectiligne selon laquelle s'étend la nervure est perpendiculaire, au niveau de ladite partie de ladite longueur, à un axe longitudinal du longeron ;
- le véhicule comporte au moins deux longerons,
   - un premier longeron fixé sur la face inférieure du plancher,
   - un deuxième longeron formant surlongeron fixé sur la face supérieure du plancher, au niveau du premier longeron.

L'invention concerne également un procédé de fabrication d'un plancher selon l'invention.

L'invention présente de nombreux avantages.

L'invention permet de prévoir un plancher commun pour plusieurs modèles de véhicules différents.

La position des longerons et/ou des surlongerons n'est finalisée pour chaque modèle qu'au moment de leur fixation sur le plancher, grâce au coulissement du longeron et/ou surlongeron par rapport à certaines nervures du plancher.

La solution selon l'invention permet d'obtenir un bon encastrement des nervures, ces dernières conférant ainsi une bonne rigidification et de bonnes propriétés acoustiques au plancher.

### PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :
- La figure 1, déjà commentée, représente schématiquement une vue en perspective d'une face supérieure d'un plancher connu de véhicule automobile ;
- Les figures 2A et 2B représentent schématiquement respectivement une vue en perspective d'une face supérieure d'un plancher selon l'invention et une vue en perspective d'une face inférieure d'un plancher selon l'invention ;
- La figure 3 représente schématiquement un détail de la figure 2A ;
- La figure 4 représente schématiquement une vue en coupe selon la ligne IV-IV de la figure 3 ;
- La figure 5 représente une vue de face d'un détail de la figure 2A ;
- La figure 6 représente une vue en coupe selon la ligne VI-VI de la figure 3.

Sur l'ensemble des figures, les éléments similaires portent des références numériques identiques.

### DESCRIPTION DETAILEE

Les figures 2A et 2B représentent schématiquement une partie d'un mode de réalisation possible d'un plancher 1 de véhicule automobile selon l'invention. La figure 2A représente une vue en perspective d'une face supérieure 11 du plancher 1. La figure 2B représente schématiquement une vue en perspective d'une face inférieure 12 du plancher 1.

Le véhicule comporte sensiblement des éléments similaires à ceux décrits en référence à la figure 1. De tels éléments similaires ne sont pas repris ici, pour des raisons de clarté et de concision.

Seuls les éléments modifiés par rapport à l'état de la technique sont décrits plus en détail.

On rappelle cependant que le plancher 1 présentant au moins une nervure 2 s'étendant selon une direction rectiligne 15 sur au moins une longueur. La nervure 2 comporte une section droite constante sur au moins une partie L de ladite longueur.

Le plancher comporte également au moins un longeron 3 fixé sur la face inférieure 12 du plancher 1.

Le longeron 3 est fixé sur le plancher 1 au niveau de ladite partie L de ladite longueur de la nervure 2. Le longeron 3 est par ailleurs apte, avant d'être fixé sur le plancher 1, à coulisser sur la nervure 2 sur ladite partie L de ladite longueur.

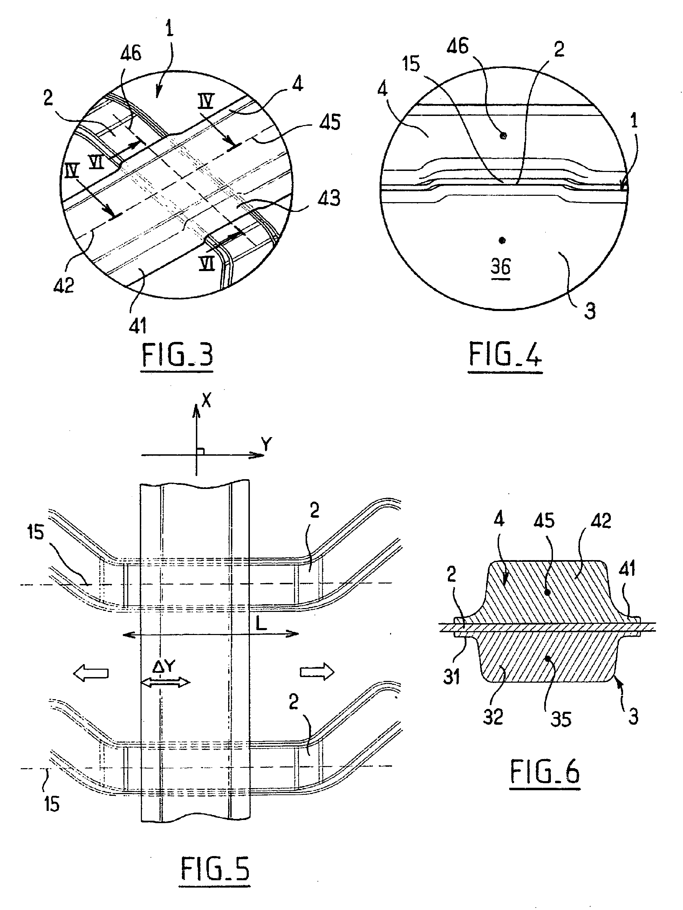

Comme le montre la figure 5, la nervure 2 a une section constante suivant la direction 15 sur au moins la partie L, la partie L ayant une longueur nécessaire pour une conception commune du plancher pour plusieurs modèles différents de véhicules, en permettant un coulissement sur la longueur de la partie L.

Comme le montrent les figures 4 et 6, le longeron 3 a une section droite, selon un axe longitudinal 35 et un axe transversal 36, complémentaire de la section droite de la nervure 2 selon des axes parallèles respectivement à l'axe longitudinal 35 et à l'axe transversal 36.

Pour permettre le coulissement du longeron 3 sur la nervure 2, les figures 2A, 2B et 5 montrent que la direction rectiligne 15 sur laquelle s'étend la nervure 2 selon une section droite constante est perpendiculaire à un axe longitudinal 35 du longeron. En d'autres termes, la direction 15 est parallèle à la direction Y.

Comme le montrent les, figures 2B et 6, le longeron 3 comporte une partie principale 32 et des feuillures 31 formant un rebord de part et d'autre de la partie principale 32 et venues de matière sur la partie principale 32. Pour permettre à la section droite du longeron 3, selon les axes 35 et 36, d'être complémentaire de la section droite de la nervure 2 selon des axes parallèles respectifs, on forme par exemple un soyage dans la chaque feuillure 31 du longeron 3 au niveau de la nervure 2.

Très avantageusement, chaque longeron 3 est associé à un autre longeron 4. Ainsi, le longeron 3 forme un premier longeron fixé sur la face inférieure 12 du plancher 1, et un deuxième longeron formant surlongeron 4 est fixé sur la face supérieure 11 du plancher 1, au niveau du premier longeron 3.

Le surlongeron 4 présente les mêmes caractéristiques que le longeron 3.

Ainsi, de façon très préférentielle, le surlongeron 4 est fixé sur le plancher 1 au niveau de la partie L de la longueur rectiligne de la nervure 2. Le surlongeron 4 est par ailleurs apte, avant d'être fixé sur le plancher 1, à coulisser sur la nervure 2 sur ladite partie L de ladite longueur.

Avantageusement et comme le montrent les figures 4 et 6, le surlongeron 4 a une section droite, selon un axe longitudinal 45 et un axe transversal 46, complémentaire de la section droite de la nervure 2 selon des axes parallèles respectivement à l'axe longitudinal 45 et à l'axe transversal 46.

Comme le montrent les figures 3 et 6, le surlongeron 4 comportent une partie principale 42 et des feuillures 41 formant un rebord de part et d'autre de la partie principale 42 et venues de matière sur la partie principale 42. Pour permettre à la section droite du sulongeron 4, selon les axes 45 et 46, d'être complémentaire de la section droite de la nervure 2 selon des axes parallèles respectifs, on forme par exemple un soyage dans la chaque feuillure 41 du surlongeron 4 au niveau de la nervure 2.

La fixation du longeron 3 et du surlongeron 4 sur le plancher 1 s'effectue par soudure, par exemple en quelques points.

Dans les développements qui précèdent, le longeron principal est fixé sur la face inférieure du plancher. En variante, le véhicule comporte un longeron selon l'invention sur la face supérieure du plancher, ce longeron étant alors très préférentiellement associé à un autre longeron selon l'invention sur la face inférieure du plancher.

## Revendications

1. Véhicule automobile comportant :
- un plancher (1) présentant une face (11) supérieure, une face inférieure (12), et au moins une nervure (2) s'étendant selon une direction rectiligne (15) sur au moins une longueur et comportant une section droite constante sur au moins une partie de ladite longueur,
- au moins un longeron (3, 4) fixé sur la face inférieure (12) ou supérieure (11) du plancher (1),
**caractérisé en ce que**
- le longeron (3, 4) est fixé sur le plancher au niveau de ladite partie de ladite longueur de la nervure (2),
- le longeron (3, 4) est par ailleurs apte, avant d'être fixé sur le plancher, à coulisser sur la nervure sur ladite partie de ladite longueur.

2. Véhicule selon la revendication 1, dans lequel le longeron (3, 4) a une section droite, selon un axe longitudinal (35, 45) et un axe transversal (36, 46), complémentaire de la section droite de la nervure (2) selon des axes parallèles respectivement à l'axe longitudinal et à l'axe transversal.

3. Véhicule selon l'une des revendications 1 ou 2, dans lequel le longeron (3, 4) est soudé sur le plancher (1).

4. Véhicule selon l'une des revendications 1 à 3, dans lequel la direction rectiligne (15) selon laquelle s'étend la nervure (2) est perpendiculaire, au niveau de ladite partie de ladite longueur, à un axe longitudinal (35, 45) du longeron (3, 4).

5. Véhicule selon l'une des revendications 1 à 4, comportant au moins deux longerons,
- un premier longeron (3) fixé sur la face inférieure du plancher (1),
- un deuxième longeron formant surlongeron (4) fixé sur la face supérieure du plancher (1), au niveau du premier longeron (3).

6. Véhicule selon la revendication 5, dans lequel le premier longeron (3) et le deuxième longeron (4) sont aptes à coulisser sur la nervure.

7. Procédé de fabrication d'un plancher (1) d'un véhicule automobile comportant une étape de :
- fourniture d'un plancher (1) présentant une face (11) supérieure, une face inférieure (12), et au moins une nervure (2) s'étendant selon une direction (15) rectiligne sur au moins une longueur et comportant une section droite constante sur au moins une partie de ladite longueur,
**caractérisé en ce qu'**il comporte les étapes de :
- coulissement d'au moins un longeron (3, 4) sur la nervure sur ladite partie de ladite longueur,
- fixation du longeron (3, 4) sur la face inférieure (12) ou supérieure (11) du plancher (1),
le longeron (3, 4) étant fixé sur le plancher au niveau de ladite partie de ladite longueur de la nervure (2).

8. Procédé selon la revendication 7, dans lequel la fixation se fait par soudure.

9. Procédé selon l'une des revendications 7 ou 8, comportant une étape de fixation de deux longerons, à savoir :
- un premier longeron (3) sur la face inférieure du plancher (1),
- un deuxième longeron formant surlongeron (4) sur la face supérieure du plancher (1), au niveau du premier longeron (3).

10. Procédé selon la revendication 9, comportant une étape de coulissement du premier longeron (3) et du deuxième longeron (4) sur la nervure.

## Claims

1. Motor vehicle comprising:
• a floor (1) having an upper surface (11), a lower surface (12), and at least one rib (2) extending in a rectilinear direction (15) for at least one length and having a right cross section that is constant for at least a part of said length, and
• at least one longitudinal member (3, 4) fixed to the lower surface (12) or upper surface (11) of the floor (1),
which vehicle is **characterized in that**
• the longitudinal member (3, 4) is fixed to the floor at said part of said length of the rib (2), and
• the longitudinal member (3, 4) is also able, before being fixed to the floor, to slide on the rib on said part of said length.

2. Vehicle according to Claim 1, in which the longitudinal member (3, 4) has a right cross section, on a longitudinal axis (35, 45) and transverse axis (36, 46), complementary to the right cross section of the rib (2) on axes parallel respectively to the longitudinal axis and to the transverse axis.

3. Vehicle according to either of Claims 1 and 2, in which the longitudinal member (3, 4) is welded to the floor (1).

4. Vehicle according to one of Claims 1 to 3, in which the rectilinear direction (15) along which the rib (2) extends is perpendicular, at said part of said length, to a longitudinal axis (35, 45) of the longitudinal member (3, 4).

5. Vehicle according to one of Claims 1 to 4, comprising at least two longitudinal members,
• a first longitudinal member (3) fixed to the lower surface of the floor (1), and
• a second longitudinal member forming an upper longitudinal member (4) fixed to the upper surface of the floor (1), above the first longitudinal member (3).

6. Vehicle according to Claim 5, in which the first longitudinal member (3) and the second longitudinal member (4) are able to slide on the rib.

7. Method of manufacturing a floor (1) for a motor vehicle, comprising a step of:
• providing a floor (1) having an upper surface (11), a lower surface (12), and at least one rib (2) extending in a rectilinear direction (15) for at least one length and having a right cross section that is constant for at least a part of said length,
**characterized in that** it comprises the following steps:
• sliding at least one longitudinal member (3, 4) on the rib on said part of said length, and
• fixing the longitudinal member (3, 4) to the lower surface (12) or upper surface (11) of the floor (1), the longitudinal member (3, 4) being fixed to the floor at said part of said length of the rib (2).

8. Method according to Claim 7, in which the fixing is done by welding.

9. Method according to either of Claims 7 and 8, comprising a step of fixing two longitudinal members, namely:
• a first longitudinal member (3) to the lower surface of the floor (1) and
• a second longitudinal member forming an upper longitudinal member (4) to the upper surface of the floor (1), above the first longitudinal member (3).

10. Method according to Claim 9, comprising a step of sliding the first longitudinal member (3) and second longitudinal member (4) on the rib.

## Patentansprüche

1. Kraftfahrzeug, umfassend:
- einen Fußboden (1), der eine Oberseite (11), eine Unterseite (12) und mindestens eine Rippe (2) aufweist, die sich in einer geradlinigen Richtung (15) über mindestens eine Länge erstreckt und über mindestens einen Teil der Länge einen konstanten Querschnitt aufweist,
- mindestens einen Längsträger (3, 4), der an der Unterseite (12) oder Oberseite (11) des Fußbodens (1) befestigt ist,
**dadurch gekennzeichnet, dass**
- der Längsträger (3, 4) an dem Teil der Länge der Rippe (2) am Fußboden befestigt ist,
- der Längsträger (3, 4) des Weiteren vor seiner Befestigung an dem Fußboden auf der Rippe auf dem Teil der Länge gleiten kann.

2. Fahrzeug nach Anspruch 1, wobei der Längsträger (3, 4) einen Querschnitt entlang einer Längsachse (35, 45) und einer Querachse (36, 46) aufweist, der zu dem Querschnitt der Rippe (2) entlang Achsen, die parallel zu der Längsachse bzw. Querachse verlaufen, komplementär ist.

3. Fahrzeug nach Anspruch 1 oder 2, wobei der Längsträger (3, 4) mit dem Fußboden (1) verschweißt ist.

4. Fahrzeug nach einem der Ansprüche 1 bis 3, wobei die geradlinige Richtung (15), entlang der sich die Rippe (2) erstreckt, an dem Teil der Länge senkrecht zu einer Längsachse (35, 45) des Längsträgers (3, 4) verläuft.

5. Fahrzeug nach einem der Ansprüche 1 bis 4, das mindestens zwei Längsträger aufweist,
- einen ersten Längsträger (3), der an der Unterseite des Fußbodens (1) befestigt ist,
- einen einen Überlängsträger (4) bildenden zweiten Längsträger, welcher an der Oberseite des Fußbodens (1) in Höhe des ersten Längsträgers (3) befestigt ist.

6. Fahrzeug nach Anspruch 5, wobei der erste Längsträger (3) und der zweite Längsträger (4) auf der Rippe gleiten können.

7. Verfahren zur Herstellung eines Fußbodens (1) eines Kraftfahrzeugs, das einen Schritt des:
- Bereitstellens eines Fußbodens (1) umfasst, der eine Oberseite (11), eine Unterseite (12) und mindestens eine Rippe (2) aufweist, die sich in einer geradlinigen Richtung (15) über mindestens eine Länge erstreckt und über mindestens einen Teil der Länge einen konstanten Querschnitt aufweist,
**dadurch gekennzeichnet, dass** es folgende Schritte umfasst:
- Schieben mindestens eines Längsträgers (3, 4) auf der Rippe über den Teil der Länge,
- Befestigen des Längsträgers (3, 4) auf der Unterseite (12) oder Oberseite (11) des Fußbodens (1),
wobei der Längsträger (3, 4) an dem Teil der Länge der Rippe (2) an dem Fußboden befestigt ist.

8. Verfahren nach Anspruch 7, wobei das Befestigen durch Schweißen erfolgt.

9. Verfahren nach Anspruch 7 oder 8, das einen Schritt des Befestigens zweier Längsträger umfasst, nämlich:
- eines ersten Längsträgers (3) auf der Unterseite des Fußbodens (1),
- eines einen Überlängsträger bildenden zweiten Längsträgers (4) auf der Oberseite des Fußbodens (1) in Höhe des ersten Längsträgers (3).

10. Verfahren nach Anspruch 9, das einen Schritt des Schiebens des ersten Längsträgers (3) und des zweiten Längsträgers (4) auf der Rippe umfasst.
